# FASCICULE DE BREVET EUROPEEN

(11) **EP 2 923 863 B1**
(45) Date de publication et mention de la délivrance du brevet: **15.06.2016**
(21) Numéro de dépôt: 15154367.5
(22) Date de dépôt: 09.02.2015
(51) Int. Cl.: B60D 1/60

(54) **Dispositif antivol pour attelage**
Diebstahlsicherungsvorrichtung für Anhängerkupplung
Anti-theft device for coupling

(30) Priorité: 27.03.2014 FR 1452661
(43) Date de publication de la demande: 30.09.2015
(73) Titulaire: Etablissements Mottez & Cie, 59193 Erquinghem-Lys (FR)
(72) Inventeur: Mottez, Frédéric, 59193 ERQUINGHEM-LYS (FR)
(74) Mandataire: Bureau Duthoit Legros Associés

(56) Documents cités:
- EP-A1- 0 673 794
- AU-B2- 601 269
- DE-U1-202013 100 886
- US-A1- 2008 067 783
- US-B1- 6 202 453

## Description

### Domaine technique et Art antérieur

La présente invention a pour objet un dispositif antivol, et plus particulièrement un dispositif antivol pour attelage.

Un des objectifs de la présente invention est d'offrir une solution simple d'utilisation permettant de sécuriser la fixation d'une remorque sur un véhicule et d'autoriser les manoeuvres lorsqu'une telle remorque est attelée sur le véhicule.

La présente invention trouve ainsi une application particulièrement avantageuse dans le domaine des accessoires automobiles en évitant les vols de remorque.

Par remorque au sens de la présente invention, il faut comprendre ici dans toute la description qui suit tout type de système destiné à être fixé à l'arrière d'un véhicule par l'intermédiaire d'un attelage. Il peut s'agir par exemple d'une remorque, mais il peut également s'agir d'une caravane, d'une carriole, d'un box pour cheval ou de tout autre système d'attelage équivalent.

Généralement, les dispositifs antivol équipant la tête d'attelage d'une remorque se présentent sous la forme d'une mâchoire, ou boitier, comprenant deux parties mobiles l'une par rapport à l'autre, la mâchoire enserrant latéralement la tête d'attelage en position fermée.

Selon les modèles, un tel dispositif peut être utilisé sur une remorque en position attelée ou non.

Le document WO 2013/071431 divulgue un tel dispositif antivol pour remorque.

Dans ce document, le dispositif antivol est formé par une mâchoire comprenant deux éléments complémentaires articulés entre eux, chacun des éléments venant s'emboîter sur les bords latéraux de la tête d'attelage de la remorque en position fermée.

Dans ce document WO 2013/071431, chaque élément comprend des moyens de verrouillage aptes à coopérer avec un cadenas pour maintenir les deux éléments en position fermée.

Une telle solution est peu fiable au niveau de la sécurité : en effet, l'articulation entre les deux éléments de la mâchoire ainsi que le verrou sont exposés aux dégradations telles que des coups de masse ou de marteau.

De plus, une telle solution nécessite de devoir démonter puis remonter le dispositif antivol à chaque manipulation de la remorque, que ce soit pour l'atteler ou la détacher, le verrouillage se faisant au moyen de chaque partie de la mâchoire.

Par ailleurs, avec un tel dispositif antivol, il n'est pas possible d'effectuer correctement une manoeuvre en position attelée.

### Résumé et objet de la présente invention

L'invention vise à améliorer la situation décrite ci-dessus.

La présente invention a notamment pour objectif de pallier les différents inconvénients énoncés ci-dessus.

Plus précisément, un objectif de l'invention est de fournir un dispositif antivol fiable en termes de sécurité, autorisant les manoeuvres en position attelée.

L'invention a également pour objectif, au moins dans un mode de réalisation particulier, de fournir un dispositif antivol qui soit simple à mettre en place et peu coûteux.

Encore un autre objectif de l'invention, au moins dans un mode de réalisation particulier, est de fournir un dispositif antivol ne nécessitant pas le montage et/ou démontage complet du dispositif pour verrouiller ou déverrouiller l'antivol.

Ces objectifs, ainsi que d'autres qui apparaîtront plus clairement par la suite, sont atteints selon l'invention à l'aide d'un dispositif antivol pour attelage décrit dans ce qui va suivre.

Plus particulièrement, selon l'invention, l'attelage comprend une tête d'attelage montée sur une remorque et présentant une cavité destinée à recevoir dans une position attelée une boule d'attelage.

Cette boule d'attelage est de forme complémentaire à la cavité, et est montée sur un véhicule tracteur.

Avantageusement, la boule d'attelage et la tête d'attelage sont aptes à coopérer ensemble afin de solidariser la remorque et le véhicule.

Avantageusement, le dispositif antivol selon l'invention comporte :
- un premier élément, dit inférieur, destiné à être disposé sous la tête d'attelage, et
- un deuxième élément, dit supérieur, destiné à être disposé au-dessus de la tête d'attelage.

Selon la présente invention, les premier et deuxième éléments sont solidarisés entre eux par le biais de moyens de serrage de façon à enserrer la tête d'attelage et former un boitier autour de la tête d'attelage.

Avantageusement, le dispositif antivol comporte des moyens de verrouillage comprenant une collerette apte à présenter au moins deux positions dont :
- une première position, dite déverrouillée, dans laquelle la cavité est apte à recevoir la boule d'attelage, et
- une deuxième position, dite verrouillée, dans laquelle la collerette est saillante dans la cavité.

Ainsi, dans cette position verrouillée, lorsque l'attelage est en position non-attelée, la collerette empêche l'introduction de la boule d'attelage dans la cavité ; lorsque l'attelage est en position attelée, la collerette maintient en position la boule d'attelage dans la cavité.

Grâce à cet agencement de caractéristiques techniques, on dispose donc d'un dispositif antivol simple d'utilisation qui vient se fixer sur la tête d'attelage et dont les moyens de verrouillage mobiles permettent de verrouiller et/ou déverrouiller aisément et rapidement l'attelage.

Par ailleurs, grâce à l'invention, il est possible d'être en position verrouillée, que ce soit en position attelée ou non ; ainsi, il est impossible pour une personne malintentionnée d'attacher la remorque sur la boule d'attelage de son véhicule lorsque le dispositif antivol est en position verrouillée. En effet, en position non-attelée, la collerette vient obstruer la cavité de sorte qu'il n'est pas possible de venir introduire une boule d'attelage pour atteler la remorque sur un autre véhicule.

Selon des caractéristiques optionnelles de l'invention, prises seules ou en combinaison :
- l'élément inférieur comprend au moins un orifice pour l'introduction des moyens de serrage, et la collerette est configurée pour occulter ledit au moins un orifice lorsque la collerette est en positon verrouillée, de façon à empêcher l'accès aux moyens de serrage ;
- la collerette est configurée pour pivoter autour d'un axe de pivotement déterminée de la position déverrouillée vers la position verrouillée, et inversement ;
- le boîtier comprend une fente apte à autoriser le passage de la collerette de la position déverrouillée vers la position verrouillée ;
- les moyens de serrage sont configurés pour un réglage en hauteur de l'élément supérieur par rapport à l'élément inférieur ;
- la tête d'attelage comprend un bosselage, et l'élément supérieur comprend une portion transversale apte à venir en butée contre le bosselage lorsque le boitier est enserré autour de la tête d'attelage ;
- le boîtier comporte des moyens de protection configurés pour protéger le véhicule des chocs, notamment ceux provoqués lors de l'accrochage ou du décrochage de la tête d'attelage par rapport à la boule d'attelage ;
- les moyens de protection comprennent une bande constituée au moins partiellement dans un matériau amortissant tel que par exemple du caoutchouc ;
- les moyens de verrouillage comprennent un mécanisme d'immobilisation pour maintenir en position la collerette dans la position verrouillée.

Corrélativement, la présente invention porte également sur un attelage équipé d'un dispositif antivol tel que décrit ci-dessus.

Ainsi, l'objet de la présente invention, par ses différents aspects fonctionnels et structurels décrits ci-dessus, permet d'assurer un verrouillage fiable de l'attelage que ce soit en position attelée ou non-attelée ; il permet en outre d'effectuer des manoeuvres en position verrouillée. Il permet enfin d'éviter les vols d'attelage en position non-attelée en empêchant qu'on positionne une boule d'attelage dans la tête d'attelage.

### Brève description des figures annexée

D'autres caractéristiques et avantages de l'invention ressortiront de la description ci-dessous en référence aux figures 1 à 6 qui en illustrent deux modes de réalisation particuliers dépourvus de tout caractère limitatif et sur lesquelles :
- la figure 1 représente de façon schématique une vue éclatée d'un dispositif antivol conforme à l'invention selon un mode de réalisation ;
- la figure 2 représente de façon schématique une vue éclatée d'un dispositif antivol conforme à l'invention selon un autre mode de réalisation ;
- la figure 3 représente de façon schématique une vue de dessus d'une collerette selon l'invention ;
- les figures 4a et 4b représentent chacune de façon schématique une vue de dessous d'un dispositif antivol, selon l'invention, selon respectivement une position verrouillée et une position déverrouillée ;
- la figure 5 représente une vue en perspective d'une tête d'attelage équipée d'un dispositif antivol conforme à l'exemple de réalisation de la figure 1 ; et
- la figure 6 représente une vue schématique d'un attelage présentant un dispositif antivol selon l'invention avec un véhicule et une remorque.

### Description détaillée

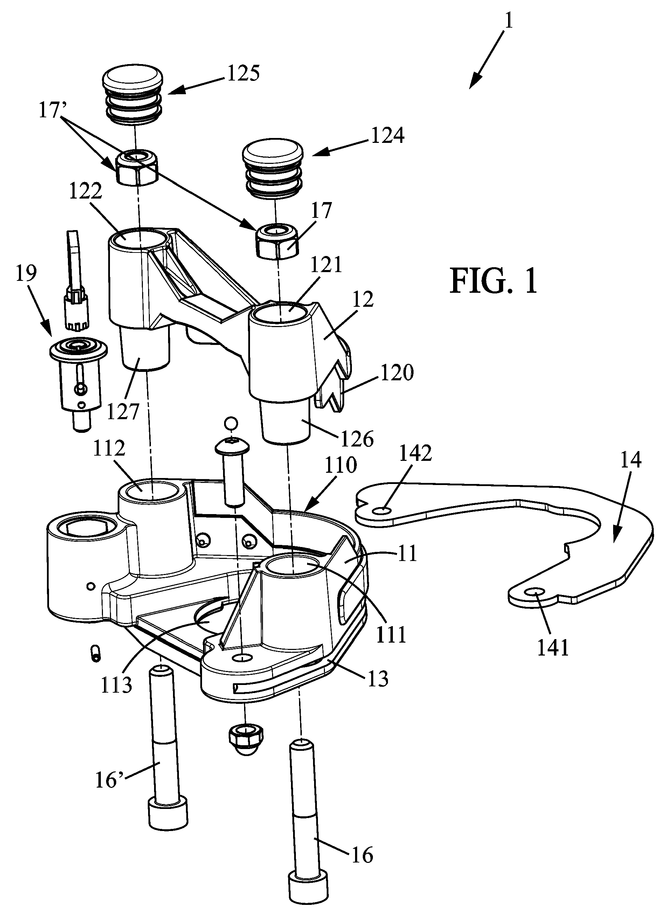

Un dispositif antivol selon deux modes de réalisation distincts va maintenant être décrit dans ce qui suit en faisant référence conjointement aux figures 1 à 6.

Comme précédemment évoqué, le principe général de l'invention repose sur la mise en oeuvre d'un dispositif antivol 1 pour attelage.

Dans l'exemple décrit, l'attelage est composé d'une tête d'attelage TA montée sur une remorque R ; cette tête d'attelage TA présente une cavité CA destinée à recevoir dans une position attelée une boule d'attelage BA montée sur un véhicule V, dit véhicule tracteur.

Cette boule d'attelage BA est de préférence de forme complémentaire à la cavité CA.

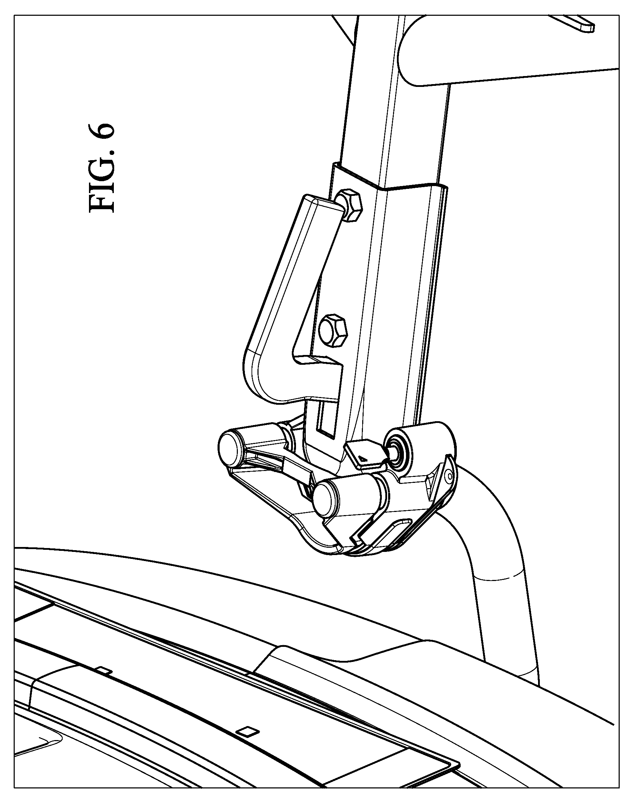

Comme illustré en figure 6, un tel attelage permet donc de solidariser la remorque R et le véhicule V.

Pour mémoire, éviter le vol d'une remorque R attelée à un véhicule V est un des objectifs de la présente invention ; permettre à un véhicule V d'effectuer des manoeuvres avec une remorque R en position attelée est un des autres objectifs de la présente invention.

Encore un des autres objectifs de la présente invention est de pouvoir empêcher le vol d'une remorque R lorsque la remorque n'est pas attelée sur le véhicule V, par exemple dans le cas où une personne gare sa remorque sur un parking et repart en voiture.

Pour atteindre ces différents objectifs, la présente invention consiste dans l'exemple décrit ici en un dispositif antivol 1 composé des éléments suivants :
- un premier élément 11, dit inférieur, qui est destiné à être disposé sous la tête d'attelage TA, et
- un deuxième élément 12, dit supérieur, qui est destiné à être disposé au-dessus de la tête d'attelage TA.

Dans cet exemple, les éléments inférieur 11 et supérieur 12 sont solidarisés entre eux par le biais de moyens de serrage 16, 16', 17, 17'.

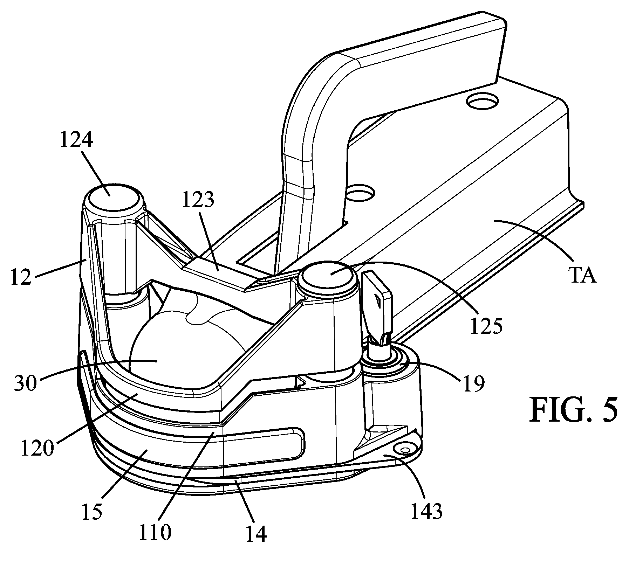

Comme illustré en figure 5 une fois les moyens de serrage positionnés et fixés, les éléments 11 et 12 forment un boîtier 10, monobloc, qui enserre la tête d'attelage TA.

De préférence, les moyens de serrage 16, 16', 17, 17' consistent en un système vis-écrou.

Alternativement, l'homme du métier comprendra ici que le système vis-écrou illustré ici peut être remplacé par un système équivalent tel que par exemple un système de vis et de trous taraudés ménagés dans l'élément supérieur, ou inversement.

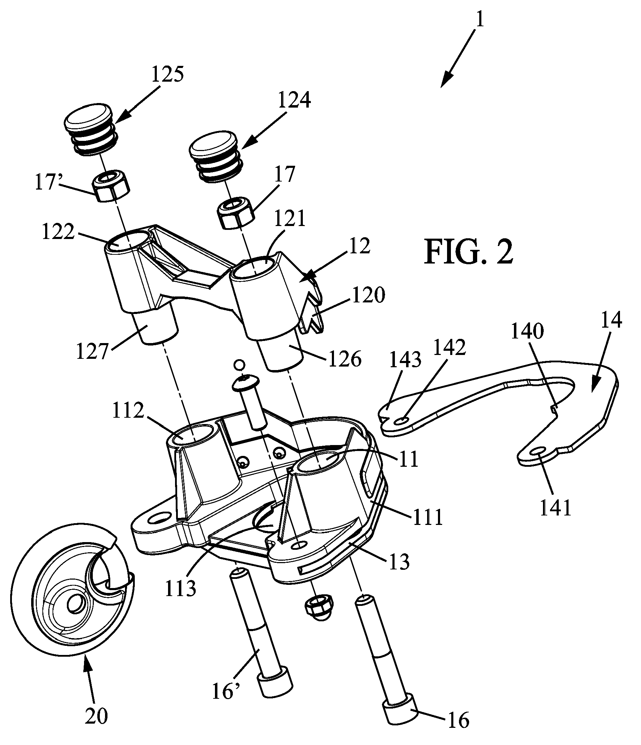

Dans l'exemple décrit ici et tel qu'illustré sur les figures 1 et 2, le dispositif antivol 1 comprend donc un élément inférieur 11 et un élément supérieur 12 ; ces éléments 11 et 12 sont emboités l'un dans l'autre et sont fixés entre eux sur une tête d'attelage TA de façon à former un boitier 10.

Plus particulièrement, dans l'exemple décrit ici, les éléments inférieur 11 et supérieur 12 sont disposés au niveau de la tête d'attelage TA par un opérateur de manière à ce qu'ils enserrent la tête d'attelage TA, les éléments inférieur 11 et supérieur 12 étant solidarisés entre eux par l'opérateur à l'aide de moyens de serrage tel qu'un système vis 16, 16' - écrous 17, 17'.

Dans l'exemple décrit ici, le boitier 10 comprend une pluralité d'orifices traversants 111, 112, 121, 122 pour le positionnement des moyens de serrage 16, 16', 17, 17'.

Comme illustré en figures 1 et 2, l'élément inférieur 11 comprend des orifices 111 et 112 pour le passage respectif des vis 16 et 16' ; l'élément supérieur 12 comprend quant à lui des orifices 121 et 122 pour le passage respectif des écrous 17 et 17'.

De préférence, l'opérateur serre les éléments inférieur 11 et supérieur 12 sur la tête d'attelage TA de manière à ce que ceux-ci ne soient plus mobiles par rapport à la tête d'attelage TA et forment un boitier 10.

L'opérateur peut laisser à demeure le boitier 10 sur la tête d'attelage TA, le boitier 10 ne gênant en rien la mise en place de la tête attelage TA sur la boule d'attelage BA.

Dans l'exemple décrit ici, l'élément inférieur 11 destiné à se placer sous la tête d'attelage présente une ouverture 113 se plaçant en vis-à-vis de la cavité CA de la tête d'attelage TA de telle façon à laisser un libre accès à la cavité CA lorsque le boitier 10 est monté sur la tête d'attelage TA.

Cette ouverture 113 dans l'élément inférieur 11 permet le passage de la boule d'attelage BA.

Il est également prévu un carénage 110 épousant la forme de la tête d'attelage TA. Ce carénage 110 est configuré pour autoriser la rotation de l'attelage.

Le carénage 110 permet également d'empêcher toute insertion d'un outil entre la tête d'attelage TA et l'élément inférieur 11 de manière à tenter de le désolidariser.

Dans cet exemple, l'élément supérieur 12 destiné à se placer au-dessus de la tête d'attelage TA présente lui aussi un carénage 120, conforme au carénage 110 de l'élément inférieur 11. Ce carénage 120 est apte à coopérer avec ce dernier 110 par emboitement.

Dans cet exemple, le carénage 120 présentant une épaisseur moindre sur au moins une partie de sa hauteur de telle façon à s'emboiter derrière le carénage 110.

Un tel assemblage des éléments 110 et 120 permet notamment de fournir une surface de protection lorsque l'opérateur monte l'attelage sur le véhicule tracteur.

Avantageusement, les carénages 110 et 120 présentent une surface courbe de façon à pouvoir manoeuvrer l'attelage aisément en position attelée, le carénage n'entrant pas en contact avec le véhicule tracteur.

Généralement, comme illustré en figure 5, la tête d'attelage TA présente un bosselage BO formé par la cavité CA, rendant la surface de la tête d'attelage TA non plane.

Avantageusement, l'élément supérieur 12 présente une portion transversale 123 destinée à entrer en contact avec la tête d'attelage TA et venant en butée contre le bosselage BP en position attelée de telle façon à empêcher le retrait du dispositif antivol en tirant simplement dessus.

Ainsi, lors de sa mise en place, l'opérateur vient positionner l'élément supérieur 12 sur la tête d'attelage TA de manière à ce que l'élément 123 repose contre cette dernière et soit en butée contre le bosselage BO.

Il est également possible de prévoir sur l'élément inférieur 11 une gorge (non représentée ici) épousant la bordure de la cavité CA et évitant ainsi le retrait du dispositif antivol 100 en tirant simplement dessus. Ceci est particulièrement utile, notamment lorsque la tête d'attelage ne présente pas de bosselage.

Dans l'exemple décrit ici, et illustré en figures 1 et 2, l'élément supérieur 12 comprend des cylindres creux 126 et 127 disposés dans le prolongement des orifices 121 et 122 ; dans cet exemple, les cylindres 126 et 127 présentent un rayon inférieur à celui des orifices 111 et 112 de manière à ce que les cylindres s'emboitent respectivement dans les orifices 111 et 112 lors de la solidarisation de l'élément inférieur 11 et de l'élément supérieur 12.

Une telle mise en oeuvre par emboitement permet de faciliter la mise en place du boitier 10 et de renforcer la structure de l'antivol pour en améliorer la résistance aux coups.

Dans cet exemple, le dispositif antivol 1 comprend des moyens de protection tels qu'une bande en caoutchouc 15 destinés à protéger le véhicule tracteur des chocs, notamment ceux pouvant être provoqués lors de l'accrochage ou du décrochage de la tête d'attelage TA à la boule d'attelage BA.

Préférentiellement, comme illustré en figure 5, la bande en caoutchouc 15 est fixée, par collage par exemple, sur l'élément inférieur 11 au niveau du carénage 110 de ce dernier.

L'opérateur peut également mettre en place des moyens de protection additionnels sur l'élément supérieur 12 en complément de cette bande en caoutchouc 15 de façon à fournir une protection continue sur toute la hauteur du carénage du boitier 10.

Selon l'exemple illustré, les éléments inférieur 11 et supérieur 12 forment, chacun, un élément monobloc et peuvent être réalisés dans un matériau métallique, ou encore composite.

Bien évidemment, tout type de matériau résistant aux coups peut être mis en oeuvre lors de la fabrication du dispositif antivol 1.

L'utilisation d'éléments monoblocs permet notamment une manutention aisée et rapide par l'opérateur lors de l'opération de montage du boitier 10 sur la tête d'attelage TA.

Avantageusement, les éléments inférieur 11 et supérieur 12 sont ajourés de manière à alléger leur poids et diminuer le coût de production.

Le dispositif antivol 1 comprend en outre des moyens de verrouillage, caractéristiques de la présente invention.

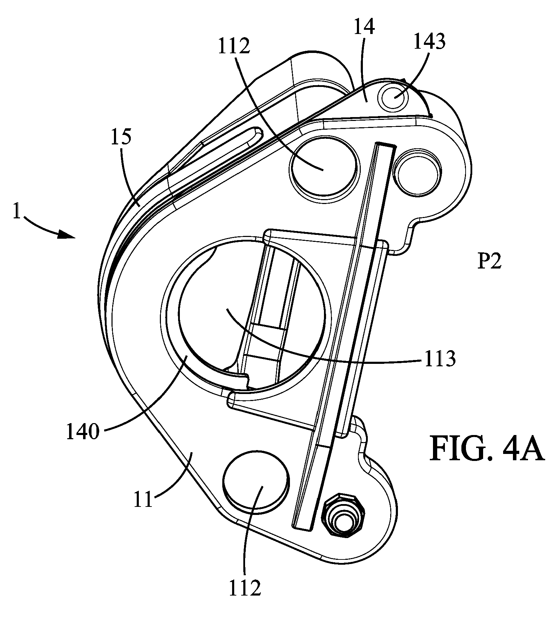

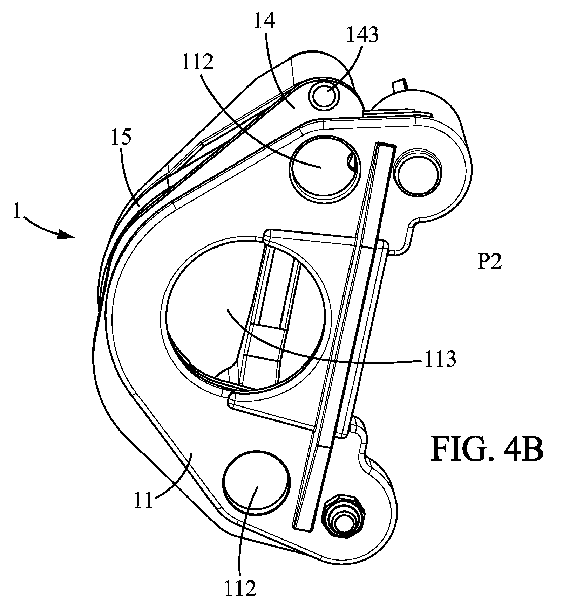

Plus particulièrement, dans l'exemple décrit ici, les moyens de verrouillage présentent une collerette 14 coopérant avec le boîtier 10 pour présenter au moins deux positions dont :
- une première position P1, dite déverrouillée, dans laquelle la cavité CA est apte à recevoir la boule d'attelage BA (voir figure 4B), et
- une deuxième position P2, dite verrouillée, dans laquelle la collerette 14 est saillante dans la cavité CA (voire figure 4A).

Ainsi, en position déverrouillée P1, la boule d'attelage BA est apte à être délogée librement de la cavité CA ; inversement, il est possible dans cette position P1 de positionner la tête d'attelage TA à l'intérieur de la cavité CA.

Dans la position verrouillée P2, la collerette 40 est saillante dans la cavité CA. En d'autres termes, comme illustré en figure 4A, cette collerette 40 présente une portion saillante 140 qui dépasse à l'intérieur du volume déterminé par l'ouverture 113 et qui est en protusion à l'intérieur de ce volume de sorte à, soit empêcher le retrait de la boule d'attelage BA lorsque celle-ci est en position attelée, soit empêcher l'introduction d'une boule d'attelage BA à l'intérieur de la cavité CA.

Ainsi, cette portion saillante 140 dans la cavité CA réduit le diamètre de l'ouverture 113 formée dans l'élément inférieur 11 :
- de façon à empêcher l'introduction de la boule d'attelage BA dans la cavité CA lorsque l'attelage est en position non-attelée, ou alternativement
- de façon à maintenir en position la boule d'attelage BA dans la cavité 11 lorsque l'attelage est en position attelée.

De préférence, la collerette 14 peut être réalisée dans un matériau métallique tel que de l'acier pour résister aux chocs et aux coups.

Avantageusement, le boîtier 10 formé par les éléments inférieur 11 et supérieur 12 comprend une fente 13, ou logement. Une telle fente 13 est configurée pour recevoir la collerette 14, notamment lorsque celle-ci se trouve en position verrouillée.

Tel qu'illustré sur les figures, l'élément inférieur 11 comprend ainsi une fente s'étendant sur tout ou partie de la profondeur de l'élément inférieur 11 et traversant l'ouverture 113 de l'élément inférieur 11, cette fente 13 étant configurée pour recevoir la collerette 14.

Selon l'invention, la collerette 14 est configurée pour pivoter de la position déverrouillée P1 (voir figure 4B) dans laquelle la boule d'attelage BA peut être logée ou délogée librement, vers la position verrouillée P2 (voir figure 4A) dans laquelle celle-ci est saillante dans la cavité CA pour empêcher le retrait ou l'insertion de la boule d'attelage BA dans la tête d'attelage, et inversement.

Ce pivotement se fait selon un axe A illustré en figure 5.

Comme illustré en figures 4A et 5, de façon à pouvoir faire pivoter la collerette 40 aisément d'une position à l'autre, celle-ci présente une zone de préhension 143, cette zone dépassant légèrement du boitier 10.

Ainsi, pour le passage de la position déverrouillée P1 vers la position verrouillée P2, l'opérateur saisit la collerette 40 au niveau de la zone de préhension 143 et la fait pivoter.

Avantageusement, la collerette 14 coopère avec le boîtier 10 de sorte qu'en position verrouillée P2 la collerette occulte les orifices 111 et 112. Ceci empêche l'accès aux moyens de serrage, et notamment à la tête des vis 16 et 16'.

Il est ainsi impossible de désolidariser les éléments inférieur 11 et supérieur 12 en position verrouillée P2.

Dans l'exemple décrit ici, comme illustré en figures 1 et 2, l'opérateur peut également venir obstruer l'accès aux écrous 17 et 17' en bouchon les orifices 121 et 122 respectivement au moyen de bouchons 124 et 125.

Dans cet exemple, les bouchons 124 et 125 sont « clipsés » en force par l'opérateur respectivement dans les orifices 121 et 122 de manière à ce qu'il soit difficile à déloger et ainsi empêcher l'accès aux écrous 17 et 17'.

Dans l'exemple décrit ici, les moyens de serrage sont configurés pour permettre un réglage en hauteur de l'élément supérieur 12 par rapport à l'élément inférieur 11.

Ceci permet d'ajuster l'élément supérieur 12 et l'élément inférieur 11 à tout type de tête d'attelage TA.

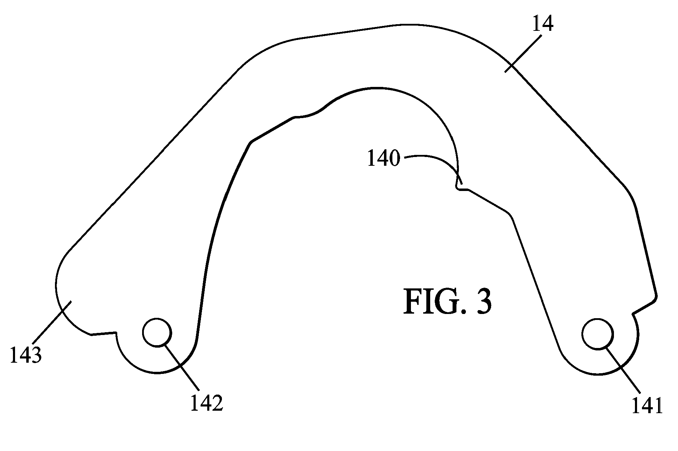

Telle qu'illustrée à la figure 3, la collerette 14 comprend deux trous 141 et 142 distants l'un de l'autre et diamétralement opposés.

Le premier trou 141 coïncide avec l'axe de pivotement A et permet le passage d'un élément de pivotement 114 constitué par exemple d'un rivet ou encore d'un système vis/écrou indesserrable.

Le deuxième trou 142 est quant à lui configuré pour coopérer avec des moyens d'immobilisation 19 ou 20.

Selon le mode de réalisation illustré en figure 1, les moyens d'immobilisation consistent en un verrou poussoir 19 intégré au boitier 10, le verrou poussoir coopérant alors avec le deuxième trou 142 pour maintenir la collerette 40 en position fermée.

Dans ce mode, lorsque l'opérateur actionne le verrou poussoir 19, un pêne vient traverser le deuxième trou 142 de façon à la maintenir en position verrouillée.

Selon le mode de réalisation illustré en figure 2, les moyens d'immobilisation consistent en un cadenas 20, l'anse du cadenas traversant le boitier 10 et le deuxième trou 142 de la lame 14 en position verrouillée.

Ainsi, grâce aux différentes caractéristiques décrites ci-dessus, la présente invention permet de remédier aux différents inconvénients ci-dessus de l'état de la technique.

La présente invention propose en effet un antivol pour remorque peu encombrant, facile d'utilisation, qui, une fois fixé, peut rester sur la tête d'attelage, et qui autorise les manoeuvres et sécurise la remorque lorsque celle-ci n'est pas en position attelée sur un véhicule.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Dispositif antivol (1) pour attelage comprenant une tête d'attelage (TA) montée sur une remorque (R) et présentant une cavité (CA) destinée à recevoir dans une position attelée une boule d'attelage (BA), de forme complémentaire à la cavité (CA), montée sur un véhicule tracteur (V) pour solidariser ladite remorque (R) et ledit véhicule (V),
ledit dispositif antivol (1) comportant :
- un premier élément (11), dit inférieur, destiné à être disposé sous ladite tête d'attelage (TA), et
- un deuxième élément (12), dit supérieur, destiné à être disposé au-dessus de ladite tête d'attelage (TA),
lesdits premier et deuxième éléments (11, 12) étant solidarisés entre eux par le biais de moyens de serrage (16, 16', 17, 17') de façon à enserrer ladite tête d'attelage (TA) et former un boitier (10) autour de ladite tête d'attelage (TA),
ledit dispositif antivol (1) étant **caractérisé en ce qu'**il comporte des moyens de verrouillage comprenant une collerette (14) apte à présenter au moins deux positions (P1, P2) dont :
- une première position (P1), dite déverrouillée, dans laquelle la cavité (CA) est apte à recevoir la boule d'attelage (BA), et
- une deuxième position (P2), dite verrouillée, dans laquelle la collerette (14) est saillante dans la cavité (CA).

2. Dispositif antivol (1) selon la revendication 1, dans lequel l'élément inférieur (11) comprend au moins un orifice (111, 112) pour l'introduction desdits moyens de serrage (16, 16', 17, 17'), et dans lequel ladite collerette (14) est configurée pour occulter ledit au moins un orifice (111, 112) lorsque ladite collerette (14) est en positon verrouillée (P2), de façon à empêcher l'accès auxdits moyens de serrage (16, 16', 17, 17').

3. Dispositif antivol (1) selon la revendication 1 ou 2, dans lequel la collerette (14) est configurée pour pivoter autour d'un axe de pivotement déterminée (A) de la position déverrouillée (P1) vers la position verrouillée (P2), et inversement.

4. Dispositif antivol (1) selon la revendication 3, dans lequel le boîtier (10) comprend une fente (13) apte à autoriser le passage de la collerette (14) de la position déverrouillée (P1) vers la position verrouillée (P2).

5. Dispositif antivol (1) selon l'une quelconque des revendications 1 à 4, dans lequel lesdits moyens de serrage (16, 16', 17, 17') sont configurés pour un réglage en hauteur de l'élément supérieur (12) par rapport à l'élément inférieur (11).

6. Dispositif antivol (1) selon l'une quelconque des revendications 1 à 5, ladite tête d'attelage (TA) comprenant un bosselage (BO), dans lequel ledit élément supérieur (12) comprend une portion transversale (123) apte à venir en butée contre ledit bosselage (BO) lorsque ledit boitier (10) est enserré autour de ladite tête d'attelage (TA).

7. Dispositif antivol (1) selon l'une quelconque des revendications 1 à 6, dans lequel le boîtier (10) comporte des moyens de protection (15) configurés pour protéger le véhicule (V) des chocs, notamment ceux provoqués lors de l'accrochage ou du décrochage de la tête d'attelage (TA) par rapport à la boule d'attelage (BA).

8. Dispositif antivol (1) selon l'une des revendications 7, dans lequel les moyens de protection (15) comprennent une bande constituée dans un matériau amortissant tel que par exemple du caoutchouc.

9. Dispositif antivol (1) selon l'une quelconque des revendications 1 à 8, dans lequel les moyens de verrouillage comprennent un mécanisme d'immobilisation (19, 20) pour maintenir en position la collerette (14) dans la position verrouillée (P2).

10. Attelage équipé d'un dispositif antivol (1) selon l'une quelconque des revendications 1 à 9.

## Patentansprüche

1. Diebstahlsicherung (1) zum Kuppeln, umfassend einen Kupplungskopf (TA), der auf einem Anhänger (R) montiert ist, und einen Hohlraum (CA) aufweist, der dazu bestimmt ist, um in einer Kupplungsposition eine Kupplungskugel (BA) mit einer Form aufzunehmen, die komplementär zum Hohlraum (CA) ist, montiert auf einem Zugfahrzeug (V), um den Anhänger (R) und das Fahrzeug (V) fest miteinander zu verbinden,
wobei die Diebstahlsicherung (1) Folgendes umfasst:
- ein erstes Element (11), bezeichnet als unteres Element, das dazu bestimmt ist, um unter dem Kupplungskopf (TA) angebracht zu werden, und
- ein zweites Element (12), bezeichnet als oberes Element, das dazu bestimmt ist, um über dem Kupplungskopf (TA) angebracht zu werden,
wobei das erste und das zweite Element (11, 12) mit Hilfe von Spannvorrichtungen (16, 16', 17, 17') fest miteinander verbunden sind, um den Kupplungskopf (TA) einzuspannen und ein Gehäuse (10) um den Kupplungskopf (TA) zu bilden,
wobei die Diebstahlsicherung (1) **dadurch gekennzeichnet ist, dass** sie Verriegelungsmittel umfasst, die einen Kragen (14) umfassen, der ausgelegt ist, um mindestens zwei Positionen (P1, P2) aufzuweisen, darunter:
- eine erste Position (P1), bezeichnet als entriegelte Position, in der der Hohlraum (CA) dazu ausgelegt ist, die Kupplungskugel (BA) aufzunehmen, und
- eine zweite Position (P2), bezeichnet als verriegelte Position, in der der Kragen (14) in den Hohlraum (CA) vorspringt.

2. Diebstahlsicherung (1) nach Anspruch 1, wobei das untere Element (11) mindestens eine Öffnung (111, 112) zum Einführen der Spannungsvorrichtungen (16, 16', 17, 17') umfasst, und wobei der Kragen (14) konfiguriert ist, um die mindestens eine Öffnung (111, 112) zu verbergen, wenn sich der Kragen (14) in der verriegelten Position (P2) befindet, um den Zugriff auf die Spannungsvorrichtungen (16, 16', 17, 17') zu verhindern

3. Diebstahlsicherung (1) nach Anspruch 1 oder 2, wobei der Kragen (14) konfiguriert ist, um um eine bestimmte Schwenkachse (A) aus der entriegelten Position (P1) in die verriegelte Position (P2) zu schwenken und umgekehrt.

4. Diebstahlsicherung (1) nach Anspruch 3, wobei das Gehäuse (10) einen Schlitz (13) umfasst, der ausgelegt ist, um den Durchgang des Kragens (14) aus der entriegelten Position (P1) in die verriegelte Position (P2) zu ermöglichen.

5. Diebstahlsicherung (1) nach einem der Ansprüche 1 bis 4, wobei die Spannungsvorrichtungen (16, 16', 17, 17') konfiguriert sind, um die Höhe des oberen Elements (12) mit Bezug auf das untere Element (11) einzustellen.

6. Diebstahlsicherung (1) nach einem der Ansprüche 1 bis 5, wobei der Kupplungskopf (TA) eine Prägung (BO) umfasst, wobei das obere Element (12) einen Querabschnitt (123) umfasst, der ausgelegt ist, um gegen die Prägung (BO) zu stoßen wenn das Gehäuse (10) um den Kupplungskopf (TA) eingespannt ist.

7. Diebstahlsicherung (1) nach einem der Ansprüche 1 bis 6, wobei das Gehäuse (10) Schutzmittel (15) umfasst, die konfiguriert sind, um das Fahrzeug (V) vor Stößen zu schützen, insbesondere denjenigen, die bei der Befestigung oder der Loslösung des Kupplungskopfes (TA) mit Bezug auf die Kupplungskugel (BA) hervorgerufen werden.

8. Diebstahlsicherung (1) nach einem der Ansprüche 7, wobei die Schutzmittel (15) einen Streifen umfassen, der aus einem dämpfenden Material besteht, wie z.B. Gummi.

9. Diebstahlsicherung (1) nach einem der Ansprüche 1 bis 8, wobei die Verriegelungsmittel einen Immobilisierungsmechanismus (19, 20) umfassen, um den Kragen (14) in der verriegelten Position (P2) zu halten.

10. Kupplung, ausgestattet mit einer Diebstahlsicherung (1) nach einem der Ansprüche 1 bis 9.

## Claims

1. Anti-theft device (1) for coupling comprising a coupling head (TA) mounted on a trailer (R) and having a cavity (CA) intended to receive in a coupled position a coupling ball (BA), of a shape complementary with the cavity (CA), mounted on a towing vehicle (V) in order to join said trailer (R) and said vehicle (V), said anti-theft device (1) comprising:
- a first member (11), called lower, intended to be arranged below said coupling head (TA), and
- a second member (12), called upper, intended to be arranged above said coupling head (TA),
said first and second members (11, 12) being joined together by means of clamping means (16, 16', 17, 17') so as to clamp said coupling head (TA) and form a case (10) around said coupling head (TA),
said anti-theft device (1) **characterised in that** it comprises locking means comprising a collar (14) able to have at least two positions (P1, P2) of which:
- a first position (P1), called unlocked, wherein the cavity (CA) is adapted to receive the coupling ball (BA), and
- a second position (P2), called locked, wherein the collar (14) is protruding into the cavity (CA).

2. Anti-theft device (1) according to claim 1, wherein the lower member (11) comprises at least one orifice (111, 112) for the introduction of said clamping means (16, 16', 17, 17'), and wherein said collar (14) is configured to cover said at least one orifice (111, 112) when said collar (14) is in the locked position (P2), in such a way as to prevent access to said clamping means (16, 16', 17, 17').

3. Anti-theft device (1) according to claim 1 or 2, wherein the collar (14) is configured to pivot about a determined pivot axis (A) from the unlocked position (P1) to the locked position (P2), and inversely.

4. Anti-theft device (1) according to claim 3, wherein the case (10) comprises a slot (13) able to allow for the passage of the collar (14) from the unlocked position (P1) to the locked position (P2).

5. Anti-theft device (1) according to any of claims 1 to 4, wherein said clamping means (16, 16', 17, 17') are configured for an adjustment in height of the upper member (12) with respect to the lower member (11).

6. Anti-theft device (1) according to any of claims 1 to 5, said coupling head (TA) comprising an embossing (BO), wherein said upper member (12) comprises a transverse portion (123) able to abut against said embossing (BO) when said case (10) is clamped around said coupling head (TA).

7. Anti-theft device (1) according to any of claims 1 to 6, wherein the case (10) comprises means of protection (15) configured to protect the vehicle (V) from impacts, in particular those caused during the coupling or uncoupling of the coupling head (TA) with respect to the coupling ball (BA).

8. Anti-theft device (1) according to one of claims 7, wherein the means of protection (15) include a strip comprising of a shock-absorbing material such as for example rubber.

9. Anti-theft device (1) according to any of claims 1 to 8, wherein the locking means comprise an immobilising mechanism (19, 20) for maintaining the collar (14) in position in the locked position (P2).

10. Coupling provided with an anti-theft device (1) according to any of claims 1 to 9.
